**Europäisches Patentamt**

**European Patent Office**

**Office européen des brevets**

(19)

(11) Veröffentlichungsnummer: **0 166 168**

**B1**

(12) **EUROPÄISCHE PATENTSCHRIFT**

(45) Veröffentlichungstag der Patentschrift:
06.04.88

(51) Int. Cl.⁴: **G 01 G 19/02**, G 01 G 3/14

(21) Anmeldenummer: **85106025.1**

(22) Anmeldetag: **15.05.85**

(54) **Radlastwaage.**

(30) Priorität: **18.05.84 EP 84105672**

(43) Veröffentlichungstag der Anmeldung:
**02.01.86 Patentblatt 86/1**

(45) Bekanntmachung des Hinweises auf die Patenterteilung:
**06.04.88 Patentblatt 88/14**

(84) Benannte Vertragsstaaten:
**AT BE CH DE FR GB IT LI NL SE**

(56) Entgegenhaltungen:
**EP-A-0 065 176**
**CH-A-497 690**
**US-A-3 949 822**

(73) Patentinhaber: **Dr.- Ing. Ludwig Pietzsch GmbH & Co., Hertzstrasse 32- 34, D-7505 Ettlingen (DE)**

(72) Erfinder: **Horn, Klaus, Prof. Dr.- Ing., Lindenstrasse 10a, D-3300 Braunschweig-Watenbüttel (DE)**
Erfinder: **Overlach, Knud, Dr.- Ing., Ernst Barlach Ring 11, D-7505 Ettlingen 6 (DE)**
Erfinder: **Pietzsch, Ludwig, Dr.- Ing., Im Rosengärtle 14, D-7500 Karlsruhe 41 (DE)**
Erfinder: **Gassner, Siegfried, Bühlstrasse 2, D-7507 Pfinztal (DE)**

(74) Vertreter: **Liesegang, Roland, Dr.- Ing., FORRESTER & BOEHMERT Widenmayerstrasse 4 Postfach 22 01 37, D-8000 München 22 (DE)**

## Beschreibung

Die Erfindung betrifft eine Radlastwaage mit einer flachen Platte aus elastischem Material mit Meßeigenschaften, die an zwei gegenüberliegenden Seitenkanten auflagerbar ist und paarweise angeordnete Ausnehmungen aufweist, die zwischen sich Stege bilden, an denen Dehnungsmeßelemente zum Erfassen von Scherbeanspruchungen angebracht sind.

Bei einer bekannten Radlastwaage dieser Art sind die Stege zwischen jeweils runden Erweiterungen eines Paares von Ausnehmungen gebildet, und Dehnungsmeßelemente sind auf die gegenüberliegenden Wände dieser Erweiterungen, d. h. auf die beiden entgegengesetzten Stegwände geklebt (CH-A 497 690). Die Ausnehmungen sind dabei in sich geschlossen.

Bei einer anderen bekannten Radlastwaage sind die zwischen sich einen Steg bildenden Ausnehmungen schlitzartig ausgebildet und gehen von den Seitenkanten der Platte aus. Die Dehnungsmeßstreifen sind dabei in der Ebene der Plattenoberseite auf die Stege aufgeklebt (EP-A 1-0034656). Mit einer solchen Anordnung lassen sich lediglich Biegebeanspruchungen der von einem Rad belasteten Platte ermitteln.

Der Erfindung liegt die Aufgabe zugrunde, eine transportable Radlastwaage einfacher Bauart zu schaffen, die bei einfacher Herstellung eine hohe Meßgenauigkeit gewährleistet.

Zur Lösung dieser Aufgabe ist bei einer Radlastwaage der eingangs beschriebenen Art erfindungsgemäß vorgesehen, daß jeder Steg mindestens einen abgeschlossenen Hohlraum mit in Querschnittsrichtung der Platte verlaufenden Wänden enthält, an denen die Dehnungsmeßelemente angebracht sind.

Nach dem Einbringen und Anheften der Dehnungsmeßelemente an den Wänden der Hohlräume lassen sich diese in einfacher Weise durch Dichtstopfen oder dgl. hermetisch abschließen, so daß die Meßelemente und ihre Anbringungsstellen sowie ihre elektrischen Anschlüsse vor jeglichen schädlichen Außeneinflüssen geschützt untergebracht sind.

Bei einer einfachen Ausführung der Erfindung sind die Hohlräume von verschlossenen Bohrungen gebildet.

Vorzugsweise gehen die Ausnehmungen ebenso wie die Bohrungen von einer Seitenkante der Platte aus und verlaufen quer dazu.

Eine besonders vorteilhafte Ausgestaltung der Erfindung zeichnet sich dadurch aus, daß in jedem Steg zwei Bohrungen vorgesehen sind. Dabei sind dann die Dehnungsmeßelemente zweckmäßig in gleichen Abständen von der Seitenkante der Platte auf parallele, ebene Wandabschnitte der Bohrungswände aufgeklebt, die jeweils zunächst den benachbarten Ausnehmungen liegen. Jede Bohrung enthält dabei also nur ein Dehnungsmeßelement, In weiterer Ausgestaltung dieser bevorzugten Ausführung der Erfindung ist zur Abstützung der Platte auf dem Untergrund jeder Steg über ein Auflager auf einem Fußelement abgestützt, während die übrigen Plattenbereiche unabgestützt sind. Die Platte ist also hierbei längs ihrer beiden gegenüberliegenden Seitenkanten ausschließlich über die als "Pratzen" fungierenden Stege und deren Auflager abgestützt.

Diese Auflager sind vorzugsweise zwischen den beiden Bohrungen jedes Steges angeordnet und als Punktauflager ausgebildet, welches den zugehörigen Steg auf je einem von zwei unter den Seitenkanten verlaufenden Fußelementen abstützt.

Die Anbringorte der Dehnungsmeßstreifen in Richtung der Stegbreite gesehen sollten vorteilhafterweise zusammenfallend mit den Orten geringster Schubverformung aufgrund der Querbiegung der Stege gewählt werden. In der Praxis hat sich eine Dimensionierung als günstig herausgestellt, bei welcher die Tiefe der Ausnehmungen zur Tiefe des Anbringortes der Dehnungsmeßelemente in den Bohrungen gemessen von der Seitenkante der Platte aus sich etwa wie 3 : 2 verhält, wobei die Stegbreite zum Abstand des Anbringungsortes der Dehnungsmeßelemente von der nächst gelegenen Ausnehmung, gemessen längs der Seitenkante, sich etwa wie 10 : 1 verhalten kann.

Ferner ist von Vorteil, wenn längs zweier gegenüberliegender Seitenkanten der Platte mindestens zwei, vorzugsweise drei Stege mit einem Mittenabstand benachbart der Stege nicht kleiner als die doppelte Stegbreite und nicht größer als die Breite eines üblichen LKW-Zwillingsreifens angeordnet sind.

Die Platte nach der Erfindung wird vorteilhafterweise aus einem elastischen Material mit Meßeigenschaften hergestellt. Als besonders geeignet hat sich als Ausgangsmaterial zur Herstellung der Platte ein Walzblech der Aluminiumlegierung AlZnMgCu 0,5 herausgestellt.

Die Erfindung schafft eine flache, leicht zu transportierende Radlastwaage geringen Gewichts und hoher Genauigkeit in der Klasse der Grobwaagen, wobei der Herstellaufwand begrenzt ist. Ein besonderer Vorteil der erfindungsgemäßen Radlastwaage ist, daß sie sehr genaue Meßergebnisse unabhängig von der Auffahrrichtung liefert. Mit anderen Worten kann die Waage sowohl in Richtung quer zu den Seitenkanten, d. h. in Längsrichtung der Stege, als auch längs zu den Seitenkanten oder in Richtung schräg dazu überfahren werden, wobei die Meßergebnisse nicht unterschiedlich ausfallen. Bevorzugt ist aus praktischen Gründen der Standfestigkeit der Waage auf der Unterlage ein Auffahren in Längsrichtung der Stege, d. h. quer zu den Seitenkanten.

Da bei der Erfindung die Rad- oder Achslast aufgrund der in den Stegen erzeugten Scherbeanspruchungen erfaßt wird, wird das Meßergebnis nicht von der Lage der Last auf der Platte beeinflußt. Außerdem ermöglicht das Erfassen der Scherbeanspruchung der Platte im Bereich der Stege eine breite, ausschließlich nach Festigkeitsgesichtspunkten dimensionierte Mittelzone. Die einzelnen Stege übertragen in der Summe stets definierte Scherkräfte unabhängig von der Lage der Last auf der Platte.

Die Erfindung ist im folgenden anhand schematischer Zeichnungen an Ausführungsbeispielen mit weiteren Einzelheiten näher erläutert. Es zeigen:

Fig. 1 eine perspektivische Ansicht einer Radlastwaage gemäß der Erfindung;

Fig. 2 eine perspektivische Ansicht eines Ausschnittes der Radlastwaage nach Fig. 1 bei II in Fig. 1;

Fig. 3 einen Schnitt nach der Linie III-III in Fig. 2;

Fig. 4 eine Teilunteransicht auf den in Fig. 2 dargestellten Teil der Radlastwaage;

Fig. 5 einen horizontalen Teilschnitt durch eine abgewandelte Ausführung einer Radlastwaage gemäß der Erfindung und

Fig. 6 einen Schnitt nach der Linie V-V in Fig. 4.

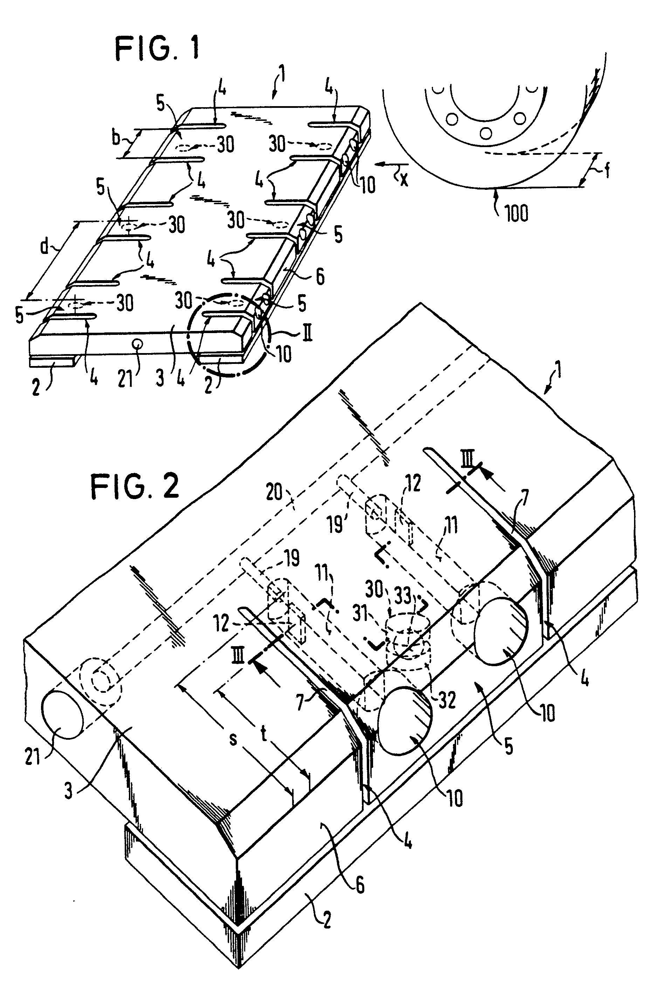

Die Ausführung der Radlastwaage nach den Fig. 1 bis 3 weist eine insgesamt mit dem Bezugszeichen 1 bezeichnete Platte auf, die zwei sich quer zur Fahrtrichtung x eines zu prüfenden Rades erstreckende, auf Fußleisten 2 abgestützte Randbereiche und dazwischen einen Biegeabschnitt 3 umfaßt. In den Randbereichen sind je eine Reihe von Ausnehmungen 4 vorgesehen, welche bis in eine Tiefe a jeweils von den Seitenkanten 6 der Platte 1 ausgehend reichen und paarweise in Fahrtrichtung x verlaufende Stege 5 bilden. Diese Stege 5 stützen die Platte 1 auf den Fußleisten 2 ab.

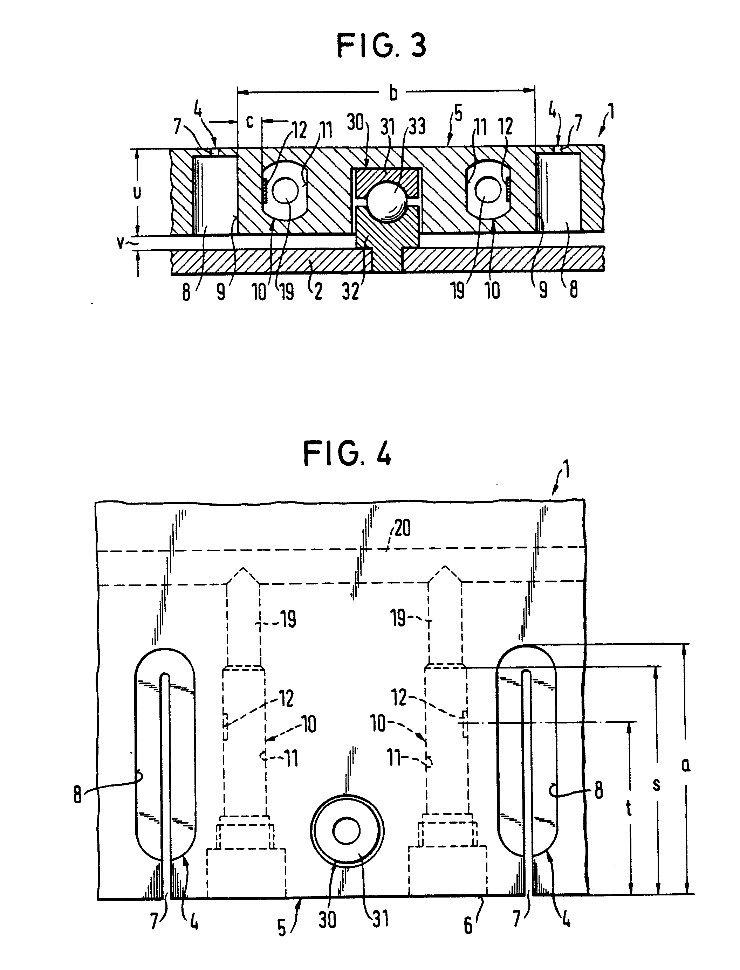

Die Gestaltung der Ausnehmungen 4 im einzelnen ist aus Fig. 3 zu erkennen. Jede Ausnehmung 4 durchsetzt die entsprechende Seitenkante 6 der Radlastwaage und weist einen engen, zur Oberseite und zur Seitenkante der Platte hin offenen Schlitzabschnitt 7 sowie einen nach unten und innen daran anschließenden breiten Schlitzabschnitt 8 auf. Der enge Schlitzabschnitt 7 verhindert das Zusetzen der Ausnehmung 4 durch größere Schmutzbrocken, Steine oder andere Fremdkörper. Die einander zugewandten Seiten 9 des breiten Schlitzabschnittes 8 bilden die Stegwände des jeweiligen Steges 5.

Jeder Steg 5 enthält zwei ebenfalls von der betreffenden Seitenkante 6 der Platte 1 ausgehende, sich parallel zu den Ausnehmungen 4 erstreckende Bohrungen 10 einer Länge s. Diese Bohrungen 10 haben gegenüberliegende ebene Wände 11, welche sich in Querschnittsrichtung, d. h. in Stärkenrichtung der Platte 1 erstrecken. Auf je einen zunächst den benachbarten Ausnehmungen 4 liegenden Wandabschnitt der ebenen Wand 11 einer Bohrung 10 ist in der Tiefe t der Bohrung ein Dehnungsmeßstreifen 12 geklebt, woraus sich die Konfiguration gemäß Fig. 3 mit zwei zueinander hinweisenden Dehnungsmeßstreifen 12 in jedem Steg 5 ergibt. Das Verhältnis der Tiefe a der Ausnehmung 4 zur Tiefe t der Anbringungsorte der Dehnungsmeßstreifen 12 gemessen von der Seitenkante 6 beträgt in der Praxis vorteilhaft etwa 3 : 2, während das Verhältnis der Stegbreite b zum Abstand c eines Dehnungsmeßstreifens 12 von der Seitenwand 9 der benachbarten Ausnehmung 4 etwa 10 : 1 beträgt.

Zwischen den beiden Bohrungen 10 jedes Steges 5 ist ein Punktauflager 30 mit einer am Steg befestigten Lagerpfanne 31, einer an der Fußleiste 2 befestigten Lagerpfanne 32 und einer dazwischen angeordneten Kugel 33 angeordnet. Die gesamte Platte 1 ist ausschließlich über solche einzeln je einem Steg 5 zugeordneten Auflager 30 auf den Fußleisten 2 abgestützt. Der Mittenabstand d zweier längs einer Seitenkante 6 benachbarter Stege 5 ist vorteilhafterweise nicht größer als die doppelte Stegbreite 2b und nicht kleiner als die Breite f eines in Fig. 1 mit der Bezugszahl 100 bezeichneten LKW-Zwillingsrades bemessen. Bei der bevorzugten Ausführung gemäß den Fig. 1 bis 3 sind insgesamt drei Stege 5 längs jeder Seitenkante 6 der Platte 1 angeordnet.

Zum elektrischen Anschluß bzw. zum Herausführen der Meßsignale der Dehnungsmeßstreifen 12 in sämtlichen Stegen 5 aus der Platte 1 sind die Bohrungen 10 mittels Bohrungsabschnitten 19 kleineren Durchmessers nach innen verlängert und stoßen auf eine Querbohrung 20, die bei 21 eine dicht verschlossene Kabeldurchführung (im einzelnen nicht dargestellt) aufweist. Stopfen zum dichten Verschließen der Bohrungen 10 an den Seitenkanten 6 sind zwar vorgesehen, aber nicht dargestellt.

Das Maß b-2c bestimmt den Abstand der Dehnungsmeßstreifen 12 in Richtung längs der Seitenkante 6 gemessen und damit den Abstand der Bohrungen 10. Dieser Abstand sollte nach den Feststellungen der Erfinder mit Vorteil so gewählt werden, daß die Dehnungsmeßstreifen an Orte geringster Schubverformung aufgrund der Querbiegung der Stege 5, d. h. der Biegung in Breitenrichtung der Stege, zu liegen kommen. Dem ist bei einer konkreten Ausführung der Platte 1 durch folgende Abmessungen Rechnung getragen:

a = 60 mm,
b = 60 mm,
c = 6,5 mm,
t = 41 mm,
s = 55 mm,
u = 20,5 mm,
v = 4 mm,

wobei u die Plattenstärke und v der Abstand der Unterseite der Platte 1 von der Fußleiste 2 ist.

Allgemein sollten die Anbringungsorte der Dehnungsmeßstreifen 12 etwa gemäß folgenden Beziehungen gewählt werden: b : c 10 : 1 und a : t 3 : 2.

Mit einer solchen Konstruktion wurden im Versuch hervorragende Ergebnisse erzielt, wobei die Meßgenauigkeit unbeeinflußt davon blieb, ob ein Fahrzeug in Richtung x wie in Fig. 1 gezeigt oder senkrecht bzw. schräg dazu auf die Platte 1 auffuhr.

Die Meßgenauigkeit lag in der Größenordnung von 0,5 % vom Endwert bei der Erfassung der Radlast, was eine Einklassifizierung der Radlastwaage in die Klasse der Grobwaagen erlaubt.

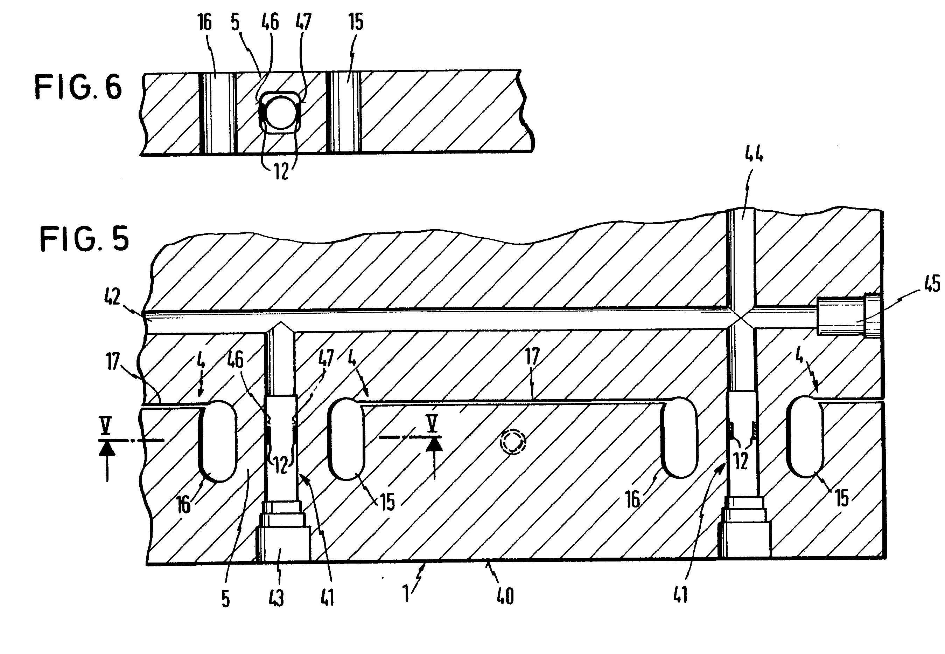

Eine weitere Ausführung einer Radlastwaage nach der Erfindung ist in den Fig. 5 und 6 gezeigt. Dabei sind für gleiche bzw. funktionsgleiche Teile gleiche Bezugszeichen wie in den Fig. 1 bis 4 verwendet.

Bei dieser Ausführung sind von der Seitenkante 40 der Platte 1 her Bohrungen 41 in die Platte eingearbeitet, welche in die Stege 5 genau mittig zwischen Schwächungsabschnitte 15, 16 einer die Platte 1 quer durchsetzenden Ausnehmung 4 hineinreichen. Die Schwächungsabschnitte 15, 16 sind durch einen schmalen, parallel zur Seitenkante 40 der Platte 1 verlaufenden Schlitz 17 verbunden, Die Bohrungen 41 münden in eine Querbohrung 42, welche somit alle Bohrungen 41 verbindet. An ihren Ausgängen 43 sind die Bohrungen hermetisch, d. h. flüssigkeits- und gasdicht, verschlossen. Mindestens eine Bohrung 41 ragt mit einem verlängerten Abschnitt 44 zur anderen Seitenkante, wo sie in eine entsprechende Querbohrung 42 (nicht gezeigt) mündet. Eine der beiden Querbohrungen 42,
- im vorliegenden Ausführungsbeispiel die gezeigte Querbohrung 42 -, weist eine dichte Glasdurchführung 45 für den elektrischen Anschluß auf.

Jede der Bohrungen 41 hat im Bereich des Stegs 5, d. h. zwischen den Schwächungsabschnitten 15 und 16, abgeflachte Wände 46, 47, auf welche Dehnungsmeßstreifen 12 gegenüberliegend aufgeklebt sind, um die Scherbeanspruchungen im Steg 5 erfassen zu können.

Beiden beschriebenen Ausführungen ist das wichtige Merkmal gemeinsam, daß die Dehnungsmeßstreifen 12 nicht auf die Wände der schwächenden Ausnehmungen, bzw. auf die Wände des Steges 5 sondern vielmehr auf die in Richtung der Plattenstärke verlaufenden Wände von im Steg 5 angeordneten Bohrungen 10 bzw. 41 geklebt sind. Die Dehnungsmeßstreifen erfassen somit hochgenau die Scherbeanspruchungen im Steg 5 unabhängig von der Auffahrrichtung und der Lage des zu vermessenden Rades auf der Platte 1. Ferner ist ein optimaler Schutz der Dehnungsmeßstreifen und ihrer elektrischen Versorgung vor mechanischem und chemischem Angriff gewährleistet.

In der gezeigten Art können Plattensegmente mit z. B. zwei in x-Richtung aufeinander ausgerichteten Stegen 5 und einer entsprechenden Anzahl von diese Stege begrenzenden Ausnehmungen hergestellt werden und zur Vergrößerung der Belastungsfähigkeit modulartig miteinander verbunden werden, z. B. mittels Stahlwinkeln. Der Abstand der Ausnehmungen 4 in x-Richtung sollte stets so groß sein, daß problemlos der Längslatsch eines Nutzfahrzeugrades auf den ausnehmungsfreien Biegeabschnitt 3 dazwischenpaßt.

Eine wie beschrieben aufgebaute Radlastwaage mit den typischen Abmessungen 700 mm in y-Richtung und 400 mm in x-Richtung hat ein Gewicht in der Größenordnung von 20 kg und ist mittels daran angebrachten Handgriffen leicht transportierbar. Dies ist im Behördeneinsatz oder im Einsatz im privatwirtschaftlichen Bereich ein wesentlicher Vorteil.

## Patentansprüche

1. Radlastwaage mit einer flachen Platte aus elastischem Material mit Meßeigenschaften, die an zwei gegenüberliegenden Seitenkanten auflagerbar ist und paarweise angeordnete Ausnehmungen (4) aufweist, die zwischen sich Stege (5) bilden, an denen Dehnungsmeßelemente (12) zum Erfassen von Scherbeanspruchungen angebracht sind, dadurch gekennzeichnet, daß jeder Steg (5) mindestens einen abgeschlossenen Hohlraum (10; 41) mit in Querschnittsrichtung der Platte (1) verlaufenden Wänden (11; 46, 47) enthält, an denen die Dehnungsmeßelemente (12) angebracht sind.

2. Radlastwaage nach Anspruch 1, dadurch gekennzeichnet, daß die Hohlräume von verschlossenen Bohrungen (10; 41) gebildet sind.

3. Radlastwaage nach Anspruch 2, dadurch gekennzeichnet, daß die Ausnehmungen (4) ebenso wie die Bohrungen (10) von einer Seitenkante (6) der Platte (1) ausgehen und quer dazu verlaufen.

4. Radlastwaage nach Anspruch 3, dadurch gekennzeichnet, daß in jedem Steg (5) zwei Bohrungen (10) vorgesehen sind.

5. Radlastwaage nach Anspruch 4, dadurch gekennzeichnet, daß die Dehnungsmeßelemente (12) im Abstand (t) von der Seitenkante (6) der Platte auf parallele ebene Wandabschnitte (11) der Bohrungswände aufgeklebt sind, die jeweils zunächst den benachbarten Ausnehmungen (4) liegen.

6. Radlastwaage nach einem der Ansprüche 1 bis 5, dadurch gekennzeichnet, daß zur Abstützung der Platte (1) auf dem Untergrund jeder Steg (5) über ein Auflager (30) auf einem Fußelement (2) abgestützt ist und daß die übrigen Plattenbereiche unabgestützt sind.

7. Radlastwaage nach Anspruch 6, dadurch gekennzeichnet, daß das Auflager (30) ein zwischen den beiden Bohrungen (10) jedes Steges (5) angeordnetes Punktauflager ist, welches den zugehörigen Steg (5) auf je einem von zwei unter den Seitenkanten verlaufenden Fußelementen (2) abstützt.

8. Radlastwaage nach einem der Ansprüche 1 bis 7, dadurch gekennzeichnet, daß die Bohrungen (10; 41) über die Ausnehmungen (4) hinaus nach innen ragende Abschnitte (19) aufweisen, welche mittels einer Querbohrung (20; 42) zur Verkabelung sämtlicher Dehnungsmeßstreifen (12) miteinander verbunden sind, und daß die Ausgänge der Bohrungen (10; 41) bis auf die Querbohrung (20; 42), welche mittels einer dichten Durchführung (45) für den elektrischen Anschluß ausgerüstet ist, hermetisch abgeschlossen sind.

9. Radlastwaage nach einem der Ansprüche 1 bis 8, dadurch gekennzeichnet, daß längs zweier gegenüberliegender Seitenkanten (6) der Platte (1) mindestens zwei, vorzugsweise drei Stege (5) mit einem Mittenabstand (d) benachbarter Stege nicht kleiner als die doppelte Stegbreite (b) und nicht größer ald die Breite (f) eines üblichen LKW-Zwillingsrades (100) angeordnet sind.

10. Radlastwaage nach einem der Ansprüche 3 bis 9, dadurch gekennzeichnet, daß die Tiefe (a) der Ausnehmungen (4) zur Tiefe (t) des Anbringortes der Dehnungsmeßelemente (12) in den Bohrungen (10) gemessen von der Seitenkante (6) der Platte (1) aus sich etwa wie 3 : 2 verhält.

11. Radlastwaage nach einem der Ansprüche 3 bis 10, dadurch gekennzeichnet, daß die Anbringorte der Dehnungsmeßelemente (12) in Breitenrichtung der Stege (5) gesehen mit den Orten geringster Schubverformung aufgrund der Querbiegung der Stege (5) zusammenfallen.

12. Radlastwaage nach Anspruch 11, dadurch gekennzeichnet, daß die Stegbreite (b) zum Abstand (c) des Anbringortes der Dehnungsmeßelemente (12) von der nächstgelegenen Ausnehmung (4), gemessen längs der Seitenkante (6), sich etwa wie 10 : 1 verhält.

13. Radlastwaage nach einem der Ansprüche 1 bis 12, dadurch gekennzeichnet, daß die Platte (1) aus einer hochfesten Leichtmetallegierung, insbesondere aus einem Walzblech der Aluminiumlegierung AlZnMgCu 0,5 besteht.

**Claims**

1. Wheel load measuring device with a flat plate of elastic material with measuring properties which can be supported on two opposite side edges and has apertures (4) disposed in pairs which define between them feet (5) on which strain measuring elements (12) for determining sheer stresses are mounted, characterised in that each foot (5) includes at least one closed hollow space (10; 41) with walls extending in the direction of the thickness of the plate on which the strain measuring elements (12) are mounted.

2. Wheel load measuring device as claimed in claim 1, characterised in that the hollow spaces are constituted by closed bores (10; 41).

3. Wheel load measuring device as claimed in claim 2, characterised in that the apertures (4) and the bores (10) start at a side edge (6) of the plate (1) and extend transverse thereto.

4. Wheel load measuring device as claimed in claim 3, characterised in that two bores (10) are provided in each foot (5).

5. Wheel load measuring device as claimed in claim 4, characterised in that the strain measuring elements (12) are secured by adhesive to parallel planar wall sections (11) of the bore walls at a spacing (t) from the side edge (6) of the plate, which wall sections each lie next to the adjacent apertures (4).

6. Wheel load measuring device as claimed in one of claims 1 to 5, characterised in that to support the plate (1) on the ground each foot (5) is supported via a support (30) on a foot element (2) and that the remaining regions of the plate are unsupported.

7. Wheel load measuring device as claimed in claim 6, characterised in that the support (30) is a point support which is disposed between the two bores (10) of each foot (5) and which supports the associated foot (5) on each of two foot elements (2) extending under the side edges.

8. Wheel load measuring device as claimed in one of claims 1 to 7, characterised in that the bores (10; 41) have sections (19) which extend inwardly beyond the apertures (4) and which are connected together by means of a transverse bore (20; 42) for wiring together all the strain measuring strips (12) and that the openings of the bores (10; 41) are hermetically sealed up to the transverse bore (20; 42) which is equipped with a sealing bush (45) for the electrical connection.

9. Wheel load measuring device as claimed in one of claims 1 to 8, characterised in that along the length of two opposing side edges (6) of the plate (1) at least two, preferably three, feet (5) are provided with a centre to centre spacing (d) of adjacent feet which is not smaller than twice the breadth (b) of the feet and not larger than the breadth (f) of a conventional lorry twin wheel (100).

10. Wheel load measuring device as claimed in one of claims 3 to 9, characterised in that the ratio of the depth (a) of the apertures (4) to the depth (t) of the mounting location of the strain measuring elements (12) in the bores (10) measured from the side edge (6) of the plate (1) is about 3 : 2.

11. Wheel load measuring device as claimed in one of claims 3 to 10, characterised in that the mounting locations of the strain measuring elements (12) seen in the direction of the breadth of the feet (5) coincide with the locations of smallest sheet deformation caused by the transverse bending of the feet (5).

12. Wheel load measuring device as claimed in claim 11, characterised in that the ratio of the breadth (b) of the feet to the spacing (c) of the mounting location of the strain measuring elements (12) from the nearest aperture (4) measured along the length of the side edge (6) is about 10 : 1.

13. Wheel load measuring device as claimed in one of claims 1 to 12, characterised in that the plate comprises a very strong light metal alloy, particularly a rolled plate of the aluminium alloy AlZnMgCu 0.5.

## Revendications

1. Balance de mesure de la charge d'une roue comportant une plaque plane en matière élastique ayant des propriétés de mesure, qui peut être supportée sur deux arêtes latérales opposées et présente des évidements (4) disposés par paires, qui forment entre eux des traverses (5) sur lesquelles sont disposés des extensomètres (12) pour détecter les contraintes de cisaillement, caractérisée en ce que chaque traverse (5) comporte au moins une cavité fermée (10; 41) ayant des parois (11; 46, 47) s'étendant dans la direction de la section transversale de la plaque (1) et sur lesquelles sont disposés les extensomètres (12).

2. Balance de mesure de la charge d'une roue selon la revendication 1, caractérisée en ce que les cavités sont formées par des perçages fermés (10; 41).

3. Balance de mesure de la charge d'une roue selon la revendication 2, caractérisée en ce que les orifices (4), tout comme les perçages (10), partent d'une arête latérale (6) de la plaque (1) et s'étendent transversalement par rapport à celle-ci.

4. Balance de mesure de la charge d'une roue selon la revendication 3, caractérisée en ce qu'on prévoit dans chaque traverse (5) deux perçages (10).

5. Balance de mesure de la charge d'une roue selon la revendication 4, caractérisée en ce que les extensomètres (12) sont collés à une distance (t) de l'arête latérale (6) de la plaque sur des sections parallèles planes (11) des parois des perçages qui se trouvent, respectivement, près des évidements voisins (4).

6. Balance de mesure de la charge d'une roue selon l'une des revendications 1 à 5, caractérisée en ce que, pour supporter la plaque (1) sur la base sous-jacente, chaque traverse (5) est supportée par l'intermédiaire d'un appui (30) sur un élément formant pied (2), et en ce que les autres zones de la plaque ne sont pas supportées.

7. Balance de mesure de la charge d'une roue selon la revendication 6, caractérisée en ce que l'appui (30) est un appui ponctuel disposé entre les deux perçages (10) de chaque traverse (5) et qui supporte la traverse correspondante (5) sur un élément formant pied (2) parmi deux éléments s'étendant sous les arêtes latérales.

8. Balance de mesure de la charge d'une roue selon l'une des revendications 1 à 7, caractérisée en ce que les perçages (10; 41) présentent au-delà des évidements (4) des sections (19) avançant vers l'intérieur qui, au moyen d'un perçage transversal (20; 42), sont reliées ensemble pour le câblage de toutes les bandes extensométriques (12), et en ce que les sorties des perçages (10; 41) sont fermées hermétiquement, à l'exception du perçage transversal (20; 42) qui est équipé d'une traversée étanche (45) pour le raccordement électrique.

9. Balance de mesure de la charge d'une roue selon l'une des revendications 1 à 8, caractérisée en ce que, le long de deux arêtes latérales (6) opposées de la plaque (1), on dispose au moins deux, de préférence trois, traverses (5) de manière que l'espacement moyen (d) des traverses voisines ne soit pas plus faible que le double de la largeur (b) d'une traverse et ne soit pas plus grand que la largeur (f) d'une roue jemelée ordinaire (100) d'un poids lourd.

10. Balance de mesure de la charge d'une roue selon l'une des revendications 3 à 9, caractérisée en ce que la profondeur (a) des évidements (4) et la profondeur (t) de la position de montage des extensomètres (12) dans les perçages (10), en mesurant à partir de l'arête latérale (6) de la plaque (1), sont dans un rapport d'environ 3 : 2.

11. Balance de mesure de la charge d'une roue selon l'une des revendications 3 à 10, caractérisée en ce que les positions de montage des extensomètres (12) considérées dans la direction de la largeur des traverses (5), coïncident avec les positions de la plus faible déformation en cisaillement sous l'effet de la flexion transversale des traverses (5).

12. Balance de mesure de la charge d'une roue selon la revendication 11, caractérisée en ce que la largeur (b) des traverses et la distance (c) entre les positions de montage des extensomètres (12) et l'évidement (4) le plus proche, en mesurant le long de l'arête latérale (6), sont dans un rapport d'environ 10 : 1.

13. Balance de mesure de la charge d'une roue selon l'une des revendications 1 à 12, caractérisée en ce que la plaque (1) est constituée par un alliage en métal léger très résistant, en particulier une tôle laminée en alliage d'aluminium AlZnMgCu 0,5.

FIG. 1

FIG. 2

# FIG. 3

# FIG. 4

FIG.6

FIG.5